# EUROPEAN PATENT SPECIFICATION

(11) **EP 3 544 407 B1**
(45) Date of publication and mention of the grant of the patent: **21.06.2023**
(21) Application number: 17720734.7
(22) Date of filing: 24.04.2017
(51) Int. Cl.: A01C 7/02, A01C 15/02

(54) **ROLLER FOR SPREADER ASSEMBLY**
WALZE FÜR VERTEILUNGSANORDNUNG
ROULEAU POUR ENSEMBLE ÉPANDEUR

(30) Priority: 23.11.2016 DE 102016013941
(43) Date of publication of application: 02.10.2019
(73) Proprietor: Husqvarna AB, 561 82 Huskvarna (SE)
(72) Inventor: KOHL, Peter, 89257 Illertissen (DE); MOCK, Axel, 89134 Blaustein (DE)
(74) Representative: Finkele, Rolf
(86) International application number: PCT/EP2017/059632
(87) International publication number: WO 2018/095584

(56) References cited:
- EP-A1- 1 685 754
- CN-A- 102 197 739
- DE-A1- 3 317 276
- GB-A- 2 145 613

## Description

### TECHNICAL FIELD

The present invention relates to spreader assemblies, and more particularly to a lawn spreader assembly for distribution of materials.

### BACKGROUND

Spreader devices are generally used for spreading and distributing materials, including, but not limited to, fertilizer and seeds on surface like, lawn, farm land etc. The spreader device typically includes a roller disposed inside a container for carrying the material and a feed opening is provided on the container for distributing material from the container to the surface. The roller is connected to wheels of the spreader device and rotates with the rotation of the wheels. Further, the roller selectively allows the material to reach a passage leading to the feed opening. The passage is defined between a container inner wall and peripheral edges of the roller. Since the spreader device may be employed for spreading material having particles with varying sizes and hardness, the particles often get stuck at the passage which causes jamming of the roller. The jamming of the roller hinders mobility of the spreader device, since the rollers are connected to the wheels. Further, the material also often gets damaged while passing through the passage because of the roller. Such jamming of the roller or damage of the material is undesired as it may lead to hindrance in proper operation of the spreader device.

The U.S. Patent 2,801,772 (hereinafter referred as the patent '772) discloses a lawn spreader. The lawn spreader is used for even, distribution of fertilizer, seeds, or the like. The lawn spreader has an elongated hopper or receptacle having end walls, front wall and rear wall. The bottom portion of the hopper has an opening through which the material is fed from the hopper onto the lawn. A crosswise disposed axle finds its bearings in the end walls and is mounted on their respective end wheels which turn together with the axle. The center portion of the axle is preferably of square cross-section and mounted on that portion of the axle is a longitudinal agitator of rubber, plastic or any other flexible material which has the properties of giving slightly upon applying sufficient pressure thereto. The patent '772 discloses an arrangement to remove particles which may become lodged between the agitator and the wall of the hopper, due to the yielding material of the agitator and due to the possibility of removal of such particles in axial direction of said agitator. Another state of the art spreader assembly is known from EP 1 685 754 A1.

Therefore, in light of the foregoing, there is a need for an improved spreader device which can overcome one or more problems stated above.

### SUMMARY

In view of the above, it is an objective of the present invention to solve or at least reduce the problems discussed above. The objective is at least partially achieved by a roller according to claim 1 and a spreader assembly according to claim 6. The spreader assembly includes a hopper adapted to contain a material. The hopper includes a feed opening for selectively discharging the material. The spreader assembly further includes a pair of wheels connected to the hopper. The spreader assembly further includes a roller configured to connect with the pair of wheels. The roller according to the present invention includes a plurality of fins and an elongated tubular member. The fins extend radially from an outer surface of the elongated tubular member. Each fin of the plurality of fins includes at least one rigid portion and at least one resilient portion connected to the rigid portion.

According to the present invention, the rigid portion includes a first portion extending from the outer surface of the elongated tubular member at a first end of the first portion.

According to the present invention, the resilient portion includes a second portion fixedly connected to a second end of the first portion.

According to the present invention, the first portion is rigid relative to the second portion.

According to the present invention, the second end of the first portion is provided with a groove.

According the present invention, the second portion is provided with a protrusion at a first end of the second portion. The protrusion is adapted to conform to a shape of the groove for coupling the first portion with the second portion.

According to an aspect of the present invention, the groove is in any one of shape including "V", "I", "L", "U" and trapezoid.

According to an aspect of the present invention, a shaft is disposed through the elongated tubular member of the roller for coupling the roller with the pair of wheels.

According to an aspect of the present invention, the plurality of fins is manufactured by multi component molding.

According to an aspect of the present invention, the multi component molding is a two component molding.

According to the present invention, a roller for a spreader assembly is provided. The roller includes the elongated tubular member, and the plurality of fins extending radially from the outer surface of the elongated tubular member. Each fin of the plurality of fins includes at least one rigid portion and at least one resilient portion connected to the rigid portion.

According to an aspect of the present invention, when the material is to be distributed and spread on the surface, the lever at the holding portion is operated to slide the shutter assembly on the outer surface of the hopper to open the feed opening. When the feed opening is opened, the operator can move the spreader assembly onto the surface. The movement of the spreader assembly rotates the pair of wheels which in turn rotates the roller inside the hopper. The rotation of the roller selectively allows the material to pass through the passage and the feed opening for distributing and spreading of the material on the surface.

According to an aspect of the present invention, during operation of the spreader assembly, the material having larger size than the passage may be allowed to pass through the passage. The plurality of fins includes the resilient portion of the second portion. The second portion is adapted to slide over even the material having larger size is stuck at the passage, thereby allowing the rotation of the roller and the pair of wheels without any interruption or stoppage.

According to the present invention, the roller having the resilient portion can be used for both harder and softer materials without any risk of damage to the material getting damaged because of the resilient portion of the roller.

According to an aspect of the present invention, the roller deforms when the hard and larger sized material pass through the passage. Thus, allowing continuous rotation of the roller.

According to an aspect of the present invention, the roller is cost effective as the spreading and distribution of the material is not stopped or halted due to the material stuck at the passage. As a result, overall efficiency of operation of the spreader assembly is increased.

According to an aspect of the present invention, a maintenance cost of the spreader assembly is also reduced since the second portion is resilient member and the second portion does not confront the harsh mechanical contact with the material stuck at the passage or passing through the feed opening.

According to an aspect of the present invention, the roller having the resilient portion of the second portion having length ranging from about 10 to about 12 mm is adapted to spread the material in a uniform pattern.

According to an aspect of the present invention, the roller does not stop the rotation and thus the pair of wheels runs smoothly on the surface.

According to an aspect of the present invention, the roller having a combination of the first portion being harder and the second portion being softer or resilient is adapted to suit most of lawn spreader assemblies.

### BRIEF DESCRIPTION OF THE DRAWINGS

The invention will be described in more detail with reference to the enclosed drawings, wherein:
FIG. **1** shows a perspective view of a spreader assembly wherein it comprises a roller according to an embodiment of the present invention;
FIG. **2** shows a cross sectional view along **A-A'** in FIG. **1****,** according to an embodiment of the present invention;
FIG. **3** shows a perspective view of a roller for the spreader assembly, according to an embodiment of the present invention;
FIG. **4** shows an exploded view of the roller shown in FIG. **3****,** according to an embodiment of the present invention;
FIG. **5** shows a magnified portion of a roller shown in FIG. **3****,** according to an embodiment of the present invention;
FIG. **6** shows a magnified portion of the roller, according to another embodiment of the present invention;
FIG. **7** shows a magnified portion of the roller, according to another embodiment of the present invention;
FIG. **8** shows a magnified portion of the roller, according to another embodiment of the present invention;
FIG. **9** shows a magnified portion of the roller, according to another embodiment of the present invention; and
FIG. **10** shows a magnified portion of the roller, according to another embodiment of the present invention.

### DESCRIPTION OF EMBODIMENTS

The present invention will be described more fully hereinafter with reference to the accompanying drawings, in which example embodiments of the invention incorporating one or more aspects of the present invention are shown. In the drawings, like numbers refer to like elements. Wherever possible, the same reference numbers will be used throughout the drawings to refer to the same or the like parts.

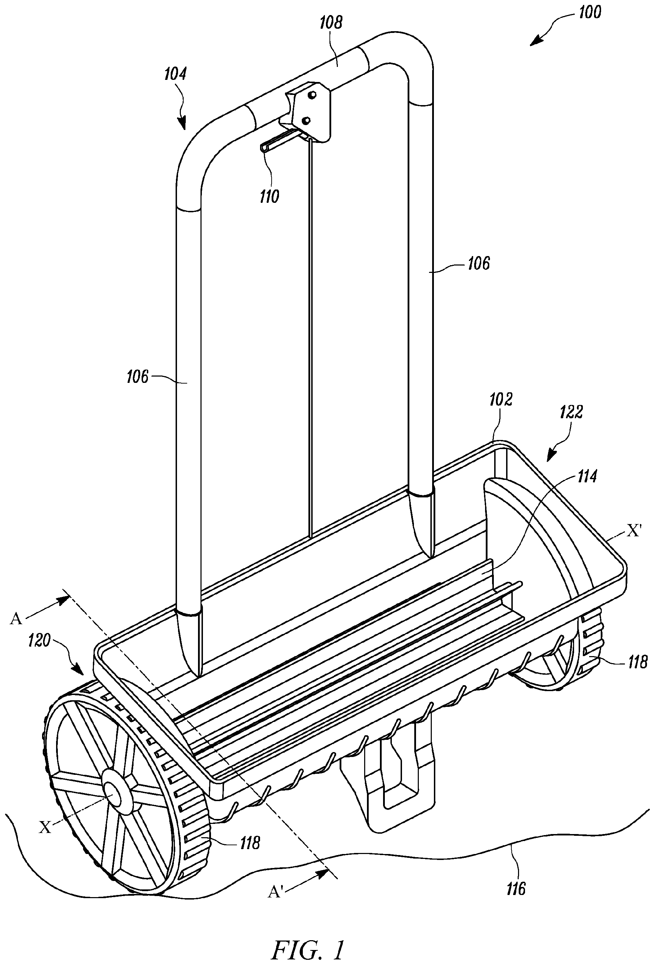

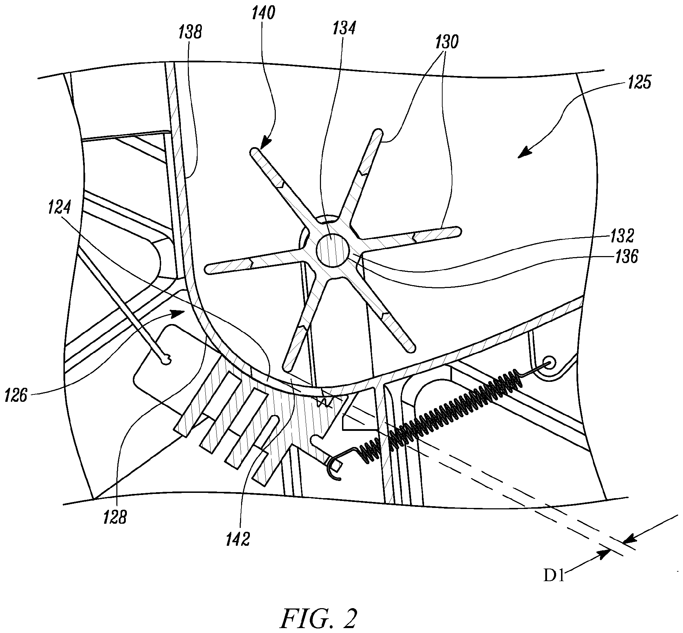

FIG. **1** illustrates a perspective view of a spreader assembly **100,** comprising a roller according to the present invention. The spreader assembly **100** may be a farm or a garden implement used for spreading and distributing a material or mixture of materials including, but not limited to fertilizer, seeds, sand, and ice melt. The spreader assembly **100** includes a hopper **102** adapted to contain the material or mixture of materials. In an example, the hopper **102** is provided in a cup shape to facilitate carrying of the material during operation of the spreader assembly **100.** The hopper **102** is further connected with a handle **104** extending vertically from the hopper **102** for facilitating holding and operating the spreader assembly **100.** In an example, the handle **104** may be a tubular member connected to the hopper **102.** In another example, the tubular member may be, but not limited to, a telescopic tube, and a cylindrical tube. In the illustrated figure, the handle **104** includes a pair of cylindrical tubes **106** extending vertically from the hopper **102.** The cylindrical tubes **106** include a holding portion **108** provided with a lever **110.** The lever **110** is connected to a shutter assembly **112** of the spreader assembly **100.** The hopper **102** is further adapted to accommodate a roller **114** inside the hopper **102** longitudinally about an axis **X-X'** of the hopper **102** for spreading the material onto a surface **116.** The roller **114** is connected with a pair of wheels **118** arranged externally at a first side surface **120** and a second side surface **122** of the hopper **102.** The pair of wheels **118** is connected to the roller **114** through a shaft **134** (shown in FIG. **2**) for transferring movement from the pair of wheels **118** to the roller **114** during a movement of the spreader assembly **100** on the surface **116.**

FIG. **2** illustrates a cross sectional view of the spreader assembly **100** along an axis **A-A'** in the FIG. **1****,** according to an embodiment of the present invention. The hopper **102** includes the first side surface **120** (shown in FIG. **1**) and the second side surface **122** (shown in FIG. **1**) opposite to the first side surface **120,** a bottom surface **126** and an open top surface **125** for receiving the material. The bottom surface **126** of the hopper **102** includes a feed opening **124.** The feed opening **124** is provided for selectively discharging the material contained in the hopper **102.** The lever **110** at the holding portion **108** of the spreader assembly **100** is operated for operating the shutter assembly **112** for opening and closing of the feed opening **124.** Thus, the shutter assembly **112** is adapted to slide over an outer surface **128** of the hopper **102** for facilitating opening and closing of the feed opening **124.** In the illustrated embodiment, the shutter assembly **112** is in closed position and thus, the feed opening **124** is in a closed position. For example, when an operator wants to refill the material in the hopper **102** or hold the spreading of the material, the feed opening **124** may be closed by the shutter assembly **112** and a movement of the spreader assembly **100** is stopped. Thus, the roller **114** in the hopper **102** is stopped from rotation.

The roller **114** includes a plurality of fins **130** and an elongated tubular member **132.** The shaft **134** is disposed through a hole **136** of the elongated tubular member **132** of the roller **114** for coupling the roller **114** with the pair of wheels **118.** In alternative embodiments, the roller **114** may be connected to the pair of wheels **118** using any other means know in the art, such as, but not limited to geared connection, splined connection and so on. The elongated tubular member **132** has a length corresponding to a length of the hopper **102.** The roller **114** and the pair of wheels **118** form a unitary assembly by an arrangement of the shaft **134** with the roller **114** and the pair of wheels **118.** In an example, a rotation of the pair of wheels **118** on the surface **116** due to movement of the spreader assembly **100** drives the roller **114** to rotate in a direction of rotation of the pair of wheels **118.** In particular, the rotation of the roller **114** rotates the elongated tubular member **132,** and thus the plurality of fins **130** is rotated for transferring the material from the hopper **102** to a passage **142.**

Specifically, an inner surface **138** of the hopper **102** and free ends **140** of each fin of the plurality of fins **130** define the passage **142.** The passage **142** extends up to the feed opening **124.** The feed opening **124** allows transfer of the material from the hopper **102** through the passage **142** to the surface **116.** The passage **142** defined between the inner surface **138** of the hopper **102** and the free ends **140** of each fin of the plurality of fins **130** has a predefined distance **"D1".**

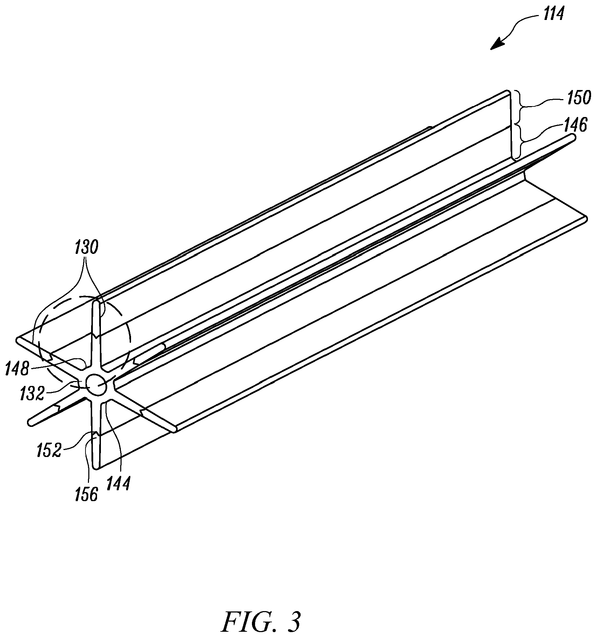

In an embodiment, the predefined distance **"D1"** defined between the inner surface **138** of the hopper **102** and the free ends **140** of each fin of the plurality of fins **130** may be "zero", i.e., a second portion **150** (shown in FIG. **3**) may have a length for contacting the inner surface **138** of the hopper **102.** In this embodiment, the second portion **150** of the roller **114** may be used to transport or move the materials of smaller sizes.

In another embodiment, the predefined distance "**D1**" defined between the inner surface **138** of the hopper **102** and the free ends **140** of each fin of the plurality of fins **130** may be less than "zero" or "negative," i.e., the second portion **150** of the roller **114** may have a length more than the predefined distance "**D1**". Thus, the second portion **150** may buckle after assembling of the roller **114** inside the hopper **102.** In this embodiment, the second portion **150** of the roller **114** may be used to transport the materials in smaller sizes. FIG. **3** illustrates a perspective view of the roller **114.** The roller **114** including the plurality of fins **130** is molded to extend radially from an outer surface **144** of the elongated tubular member **132.** In alternative embodiments, the plurality of fins **130** may extend outwardly at an angle from the outer surface **144** of the elongated tubular member **132.** In the illustrated embodiment, the number of fins provided on the roller **114** is six. However, it is to be understood that the number of fins can be varied based on the design requirements of the spreader assembly **100.** The number of fins is not meant to be limiting the scope of the present invention. Each fin of the plurality of fins **130** includes at least one rigid portion and at least one resilient portion connected to the at least one rigid portion. The rigid portion includes a first portion **146** extending from the outer surface **144** of the elongated tubular member **132** at a first end **148** of the first portion **146.** The resilient portion includes a second portion **150** fixed to a second end **152** of the first portion **146.** In the illustrated embodiment, the first portion **146** is connected to the second portion **150** using an adhesive. It is to be understood that the first portion **146** and the second portion **150** of the plurality of fins **130** may be fixedly connected using multiple mechanisms known in the art, like fusion molding. Further, the first portion **146** is composed of a rigid material relative to the second portion **150.**

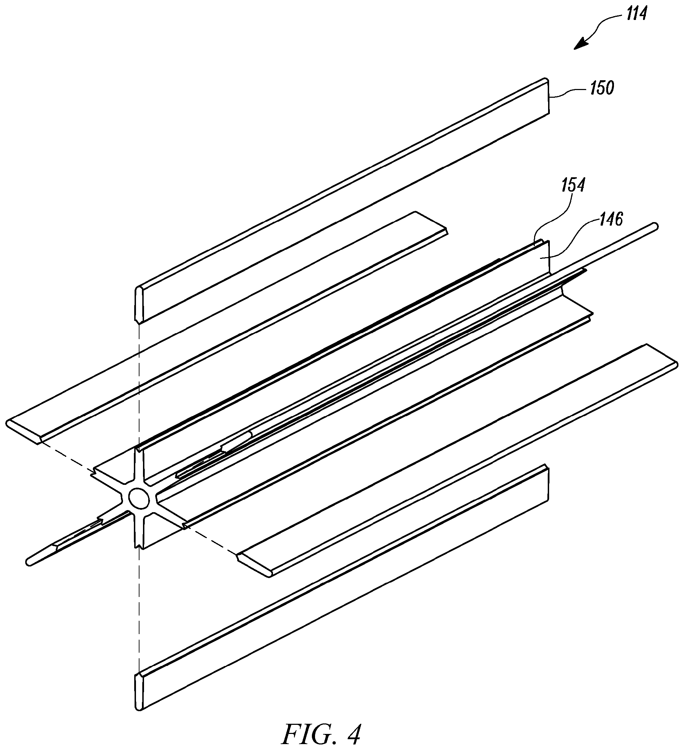

The second end **152** of the first portion **146** is provided with a groove **154** (shown in FIG. **4**) for accommodating a first end **156** of the second portion **150.** The plurality of fins **130** is manufactured by a molding process including, but not limited to, a multi component molding. In an embodiment, the multi component molding is a two component molding.

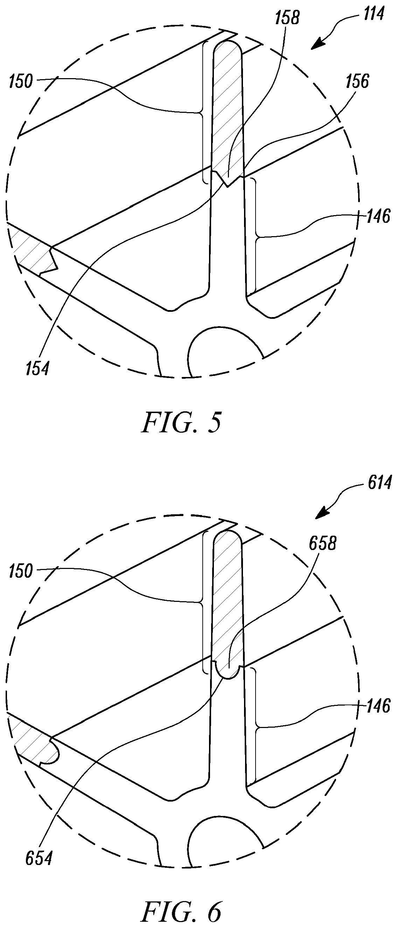

FIG. **5** illustrates a magnified portion of the roller **114** shown in FIG. **3****.** The explanation for the illustrated figure is limited to only one fin of the plurality of fins **130.** However, it is to be understood that the explanation for the other fins of the roller **114** is same as that of the fin explained in the illustrated embodiment. The second portion **150** is provided with a protrusion **158** at the first end **156** of the second portion **150.** The protrusion **158** is adapted to conform to a shape of the groove **154** for coupling the first portion **146** with the second portion **150.** In the illustrated embodiment, the groove **154** is in "**V**" shape and the protrusion **158** is adapted to match with the shape of the groove **154.**

FIG. **6** illustrates a magnified portion of a roller **614,** according to another embodiment of the present invention. In this embodiment, a groove **654** is in "**U**" shape and a protrusion **658** is adapted to match with the shape "**U**" of the groove **654.**

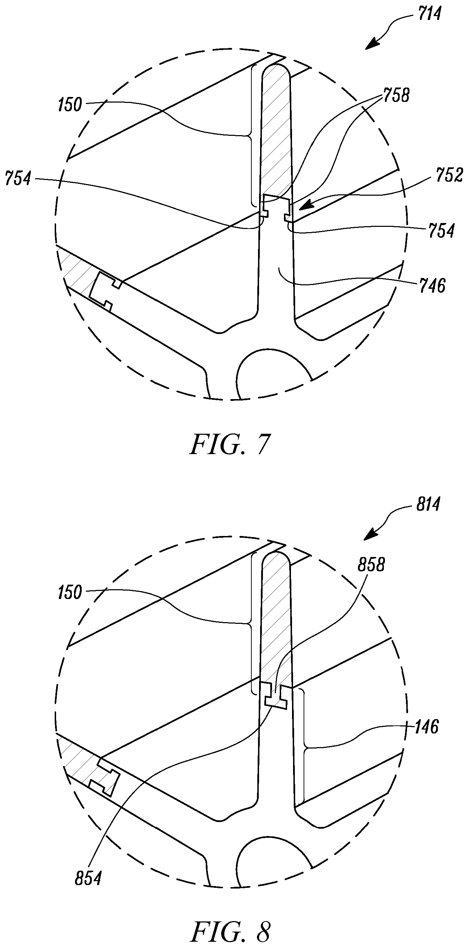

FIG. **7** illustrates a magnified portion a roller **714,** according to another embodiment of the present invention. In this embodiment, grooves **754** are in "**L**" shape at a second end **752** of a first portion **746** and protrusions **758** are adapted to match with the shape "**L**" of the grooves **754.**

FIG. **8** illustrates a magnified portion a roller **814** according to another embodiment of the present invention. In this embodiment, a groove **854** is in "**I**" shape and a protrusion **858** is adapted to match with the shape "**I**" of the groove **854.**

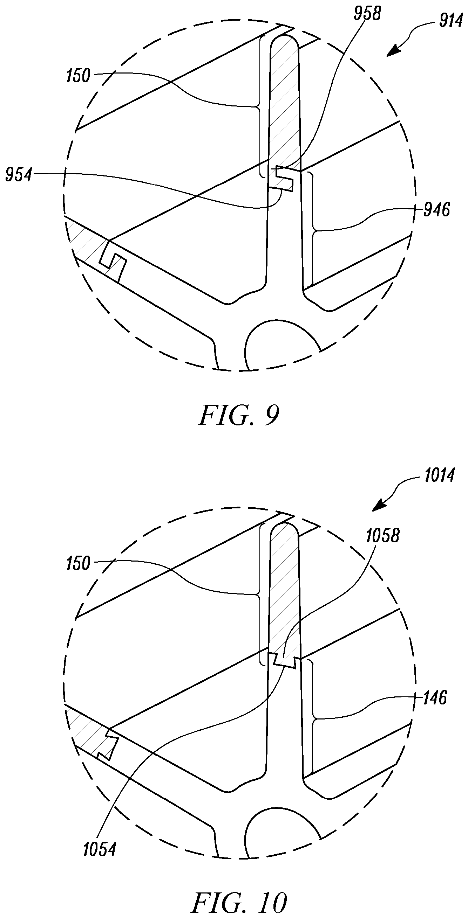

FIG. **9** illustrates a magnified portion a roller **914,** according to another embodiment of the present invention. In this embodiment, a groove **954** is in "**L**" shape on any one side of a first portion **946** and a protrusion **958** is adapted to match with the shape "**L**" of the groove **954.**

FIG. **10** illustrates a magnified portion a roller **1014,** according to another embodiment of the present invention. In this embodiment, a groove **1054** is in trapezoid shape and a protrusion **1058** is adapted to match with the trapezoid shape of the groove **1054.**

In an embodiment, when the material is to be distributed and spread on the surface **116,** the lever **110** at the holding portion **108** is operated to slide the shutter assembly **112** on the outer surface **128** of the hopper **102** to open the feed opening **124.** When the feed opening **124** is opened, the operator can move the spreader assembly **100** onto the surface **116.** The movement of the spreader assembly **100** rotates the pair of wheels **118** which in turn rotates the roller **114** inside the hopper **102.** The rotation of the roller **114** selectively allows the material to pass through the passage **142** and the feed opening **124** for distributing and spreading of the material on the surface **116.**

During operation of the spreader assembly **100,** the material having larger size than the passage **142** may be allowed to pass through the passage **142.** The plurality of fins **130** includes the resilient portion of the second portion **150.** The second portion **150** is adapted to slide over even the material having larger size thereby allowing the rotation of the roller **114** and the pair of wheels **118** without any interruption or stoppage.

The roller **114** disclosed in the present invention having the resilient portion can be used for both harder and softer materials without any risk of damage to the material getting damaged because of the roller **114.**

The roller **114** disclosed in the present invention deforms when the hard and larger sized material pass through the passage **142.** Thus, allowing continuous rotation of the roller **114.**

The roller **114** disclosed in the present invention is cost effective as the spreading and distribution of the material is not stopped or halted due to the material stuck at the passage **142.** As a result, overall efficiency of operation of the spreader assembly **100** is increased.

A maintenance cost of the spreader assembly **100** is also reduced since the second portion **150** is resilient member and the second portion **150** does not confront the harsh mechanical contact with the material stuck at the passage **142** or passing through the feed opening **124.**

The roller **114** having the resilient portion of the second portion **150** having length ranging from about 10 to about 12 mm is adapted to spread the material in a uniform pattern.

The roller **114** does not stop the rotation and thus the pair of wheels **118** runs smoothly on the surface **116.**

The roller **114** having a combination of the first portion **146** being harder and the second portion **150** being softer or resilient is adapted to suit most of lawn spreader assemblies.

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF REFERENCE NUMERALS

- 100: Spreader assembly
- 102: Hopper
- 104: Handle
- 106: Cylindrical tubes
- 108: Holding portion
- 110: Lever
- 112: Shutter assembly
- 114: Roller
- 116: Surface
- 118: Pair of wheels
- 120: First side surface
- 122: Second side surface
- 124: Feed opening
- 125: Open top surface
- 126: Bottom surface
- 128: Outer surface
- 130: Plurality of fins
- 132: Elongated tubular member
- 134: Shaft
- 136: Hole
- 138: Inner surface
- 140: Free ends
- 142: Passage
- 144: Outer surface
- 146: First portion
- 148: First end
- 150: Second portion
- 152: Second end
- 154: Groove
- 156: First end
- 158: Protrusion
- 614: Roller
- 654: Groove
- 658: Protrusion
- 714: Roller
- 746: First portion
- 752: Second end
- 754: Groove
- 758: Protrusion
- 814: Roller
- 854: Groove
- 858: Protrusion
- 914: Roller
- 946: First portion
- 954: Groove
- 958: Protrusion
- 1014: Roller
- 1054: Groove
- 1058: Protrusion
- A-A': Axis
- X-X': Axis
- D1: Distance

## Claims

1. A roller **(114, 614, 714, 814, 914, 1014)** for a spreader assembly (100) comprising: an elongated tubular member (132) and a plurality of fins **(130)** extending from an outer surface **(144)** of the elongated tubular member **(132);**
**characterized in that,**
the fins extend radially or angled from the outer surface (**144**),
each fin of the plurality of fins **(130)** includes at least one rigid portion and at least one resilient portion connected to the rigid portion,
whereas the rigid portion includes a first portion (**146**) extending from the outer surface (**144)** of the elongated tubular member (**132**) at a first end (**148)** of the first portion (**146**) and the resilient portion includes a second portion (**150**) fixed to a second end (**152**) of the first portion (**146**),
with the first portion (**146**) being composed of a rigid material relative to the second portion (**150**),
whereby the second end **(152)** of the first portion **(146, 746, 946)** is provided with a groove **(154, 654, 754, 854, 954, 1054)** and the first end **(158)** of the second portion **(150)** is provided with a protrusion **(158, 658, 758, 858, 958, 1058),** with the protrusion **(158, 658, 758, 858, 958, 1058)** adapted to conform to a shape of the groove **(154, 654, 754, 854, 954, 1054)** for coupling the first portion **(146, 746),** and **(946)** with the second portion **(150).**

2. A roller **(114, 614, 714, 814, 914, 1014)** of claim 1, wherein the groove **(154, 654, 754, 854, 954, 1054)** is in any one of shape "V", "I", "L" and "U" and trapezoid.

3. A roller **(114, 614, 714, 814, 914, 1014)** of claim 1, wherein a shaft **(134)** is disposed through the elongated tubular member (**132)** of the roller **(114, 614, 714, 814, 914, 1014)** for coupling the roller **(114, 614, 714, 814, 914, 1014)** with a pair of wheels (118) of a spreader assembly (100).

4. A roller **(114, 614, 714, 814, 914, 1014)** of claim 1, wherein the plurality of fins **(130)** is manufactured by multi component molding.

5. A roller **(114, 614, 714, 814, 914, 1014)** of claim 4, wherein the multi component molding is a two component molding.

6. A spreader assembly **(100)** comprising a roller **(114, 614, 714, 814, 914, 1014)** according to claims 1-5;
further comprising:
a hopper **(102)** adapted to contain a material, the hopper **(102)** includes a feed opening **(124)** for selectively discharging the material;
a pair of wheels **(118)** connected to the hopper (**102)**;
with the roller **(114, 614, 714, 814, 914, 1014)** configured to connect with the pair of wheels **(118).**

## Patentansprüche

1. Walze (114, 614, 714, 814, 914, 1014) für eine Verteilungsanordnung (100), aufweisend:
ein längliches Rohrelement (132) und eine Vielzahl von Rippen (130), die sich von einer Außenfläche (144) des länglichen Rohrelements (132) erstrecken;
**dadurch gekennzeichnet, dass**,
die Rippen sich radial oder abgewinkelt von der Außenfläche (144) erstrecken, wobei jede Rippe der Vielzahl von Rippen (130) mindestens einen starren Teil und mindestens einen mit dem starren Teil verbundenen elastischen Teil aufweist,
wobei der starre Teil einen ersten Teil (146) umfasst, der sich von der Außenfläche (144) des länglichen Rohrelements (132) von einem ersten Ende (148) des ersten Teils (146) aus erstreckt, und der elastische Teil einen zweiten Teil (150) umfasst, der an einem zweiten Ende (152) des ersten Teils (146) befestigt ist,
wobei der erste Teil (146) aus einem relativ zu dem zweiten Teil (150) starres Material besteht,
wobei das zweite Ende (152) des ersten Teils (146, 746, 946) mit einer Nut (154, 654, 754, 854, 954, 1054) ausgebildet ist und das erste Ende (158) des zweiten Teils (150) mit einer Ausbuchtung (158, 658, 758, 858, 958, 1058) ausgebildet ist, wobei die Ausbuchtung (158, 658, 758, 858, 958, 1058) an eine Form der Nut (154, 654, 754, 854, 954, 1054) angepasst ist, um den ersten Teil (146, 746) und (946) mit dem zweiten Teil (150) zu verbinden.

2. Walze (114, 614, 714, 814, 914, 1014) nach Anspruch 1, wobei die Nut (154, 654, 754, 854,954,1054) in einer der Formen "V", "I", "L" und "U" sowie trapezförmig ausgebildet ist.

3. Walze (114, 614, 714, 814, 914, 1014) nach Anspruch 1, wobei eine Welle (134) in dem länglichen Rohrelement (132) der Walze (114, 614, 714, 814, 914, 1014) angeordnet ist, um die Walze (114, 614, 714, 814, 914, 1014) mit einem Paar von Rädern (118) einer Verteilungsanordnung (100) zu verbinden.

4. Walze (114, 614, 714, 814, 914, 1014) nach Anspruch 1, wobei die Mehrzahl der Rippen (130) durch Mehrkomponentenspritzgießen hergestellt ist.

5. Walze (114, 614, 714, 814, 914, 1014) nach Anspruch 4, wobei das Mehrkomponentenspritzgießen ein Zweikomponentenspritzgießen ist.

6. Verteilungsanordnung (100) mit einer Walze (114, 614, 714, 814, 914, 1014) nach einem der Ansprüche 1-5;
ferner umfassend:
einen Trichter (102), der geeignet ist, ein Material zu enthalten, wobei der Trichter (102) eine Abgabeöffnung (124) zum selektiven Abgeben des Materials aufweist;
ein Paar von Rädern (118), die mit dem Trichter (102) verbunden sind;
wobei die Walze (114, 614, 714, 814, 914, 1014) derart ausgebildet ist, dass sie mit dem Paar von Rädern (118) verbunden ist.

## Revendications

1. Rouleau (114, 614, 714, 814, 914, 1014) pour un ensemble d'épandage (100) comprenant :
un élément tubulaire allongé (132) et une pluralité d'ailettes (130) s'étendant à partir d'une surface extérieure (144) de l'élément tubulaire allongé (132) ;
**caractérisé en ce que**,
les ailettes s'étendent radialement ou en angle à partir de la surface extérieure (144), chaque ailette de la pluralité d'ailettes (130) comprend au moins une partie rigide et au moins une partie élastique reliée à la partie rigide,
tandis que la partie rigide comprend une première partie (146) s'étendant à partir de la surface extérieure (144) de l'élément tubulaire allongé (132) à une première extrémité (148) de la première partie (146) et la partie élastique comprend une deuxième partie (150) fixée à une deuxième extrémité (152) de la première partie (146),
la première partie (146) étant composée d'un matériau rigide par rapport à la deuxième partie (150),
la deuxième extrémité (152) de la première partie (146, 746, 946) est pourvue d'une rainure (154, 654, 754, 854, 954, 1054) et la première extrémité (158) de la deuxième partie (150) est pourvue d'une saillie (158, 658, 758, 858, 958, 1058), la saillie (158, 658, 758, 858, 958, 1058) étant adaptée à la forme de la rainure (154, 654, 754, 854, 954, 1054) pour coupler la première partie (146, 746) et (946) à la deuxième partie (150).

2. Rouleau (114, 614, 714, 814, 914, 1014) selon la revendication 1, dans lequel la rainure (154, 654, 754, 854, 954, 1054) est de l'une quelconque des formes "V", "I", "L" et "U" et trapézoïdale.

3. Rouleau (114, 614, 714, 814, 914, 1014) selon la revendication 1, dans lequel un arbre (134) est disposé à travers l'élément tubulaire allongé (132) du rouleau (114, 614, 714, 814, 914, 1014) pour coupler le rouleau (114, 614, 714, 814, 914, 1014) avec une paire de roues (118) d'un ensemble d'épandage (100).

4. Rouleau (114, 614, 714, 814, 914, 1014) selon la revendication 1, dans lequel la pluralité d'ailettes (130) est fabriquée par moulage multi-composants.

5. Rouleau (114, 614, 714, 814, 914, 1014) selon la revendication 4, dans lequel le moulage multi-composants est un moulage à deux composants.

6. Ensemble d'épandage (100) comprenant un rouleau (114, 614, 714, 814, 914, 1014) selon les revendications 1 à 5 ;
comprenant en outre :
une trémie (102) adaptée pour contenir un matériau, la trémie (102) comprend une ouverture d'alimentation (124) pour décharger sélectivement le matériau ; une paire de roues (118) reliées à la trémie (102) ;
avec le rouleau (114, 614, 714, 814, 914, 1014) configuré pour se connecter à la paire de roues (118).
